# EUROPÄISCHE PATENTANMELDUNG

(11) **EP 4 699 939 A1**
(43) Veröffentlichungstag der Anmeldung: **25.02.2026**
(21) Anmeldenummer: 25194845.1
(22) Anmeldetag: 08.08.2025
(51) Int. Cl.: B64U 50/39, B64U 80/25, B64F 1/32, B64U 70/90

(54) **BODENSTATION FÜR DROHNEN MIT TRANSPORTSYSTEM FÜR TRANSPORTBOXEN, SYSTEM UMFASSEND EINE BODENSTATION, EINE TRANSPORTBOX UND EINE DROHNE UND VERFAHREN ZUM BETRIEB**

(30) Priorität: 21.08.2024 DE 102024123879
(71) Anmelder: Urban Ray GmbH, 50827 Köln (DE)
(72) Erfinder: Schmidt, Henry, 50823 Köln (DE); Gebler, Moritz, 52070 Aachen (DE)
(74) Vertreter: Patentanwälte Bauer Vorberg Kayser

(57) **Zusammenfassung**

Die Erfindung betrifft eine Bodenstation (1) zum automatischen Be- und/oder Entladen einer zum Transport einer Transportbox (2) eingerichteten Drohne (3), wobei die Bodenstation (1) wenigstens einen Be- und/oder Entladeplatz (4) für die Drohne (3), wenigstens einen Lagerplatz (5) zur Lagerung von jeweils einer Transportbox (2), und wenigstens einen Übergabeplatz (8) zur Ausgabe und/oder Annahme der Transportbox (2) oder deren Inhalt aufweist. Wobei die Bodenstation (1) des Weiteren ein Transportsystem (6) aufweist, welches zum Transport der Transportbox (2) innerhalb der Bodenstation (1) eingerichtet ist. Die Bodenstation (1) zeichnet sich bevorzugt dadurch aus, dass der wenigstens eine Lagerplatz (5), der wenigstens eine Übergabeplatz (8), und der wenigstens eine Be- und/oder Entladeplatz (4) derart relativ zueinander angeordnet sind, dass die Transportbox (2) zwischen dem wenigstens einen Lagerplatz (5), dem wenigstens einen Übergabeplatz (8), und dem wenigstens einen Be- und/oder Entladeplatz (4) durch Verfahren des Transportsystems (6) in zwei Dimensionen transportierbar ist. Die Erfindung betrifft des Weiteren ein System aus einer solchen Bodenstation (1), einer Drohne (3) und einer Transportbox (2) sowie ein Verfahren zum Betrieb eines derartigen Systems.

## Beschreibung

Die Erfindung betrifft eine Bodenstation zum automatischen Be- und/oder Entladen einer zum Transport einer Transportbox eingerichteten Drohne. Die Bodenstation weist einen Be- und/oder Entladeplatz für die Drohne, Lagerplätze zur Lagerung von jeweils einer Transportbox, sowie ein Transportsystem auf. Das Transportsystem ist zum Transport der Transportbox innerhalb der Bodenstation eingerichtet, sowie zur Abgabe der Transportbox an die Drohne beim Beladen der Drohne, und/oder zur Aufnahme der Transportbox von der Drohne beim Entladen der Drohne. Die Erfindung betrifft des Weiteren ein System umfassend eine solche Bodenstation, eine Drohne und eine Transportbox. Zudem betrifft die Erfindung ein Verfahren zum Betrieb eines derartigen Systems.

Aus dem Stand der Technik sind beispielsweise Systeme aus einer Drohne und einer oder mehreren Bodenstationen bekannt. Die Drohne ist dazu eingerichtet, kleinere Gegenstände wie zum Beispiel Laborproben über mehrere Kilometer zu transportieren. Zum Transport der Gegenstände kann die Drohne eine Transportbox beispielsweise in der Größenordnung eines Schuhkartons aufnehmen. Die Drohne kann mithilfe einer Bodenstation am Startpunkt vollautomatisch mit der Transportbox bestückt werden. Am Ziel landet die Drohne auf einer weiteren Bodenstation, von welcher die Transportbox vollautomatisch entgegengenommen wird. Die Transportbox oder deren Inhalt kann dann an einem Übergabeplatz der Bodenstation von einer Person entgegengenommen werden, ohne dass die Person direkten Kontakt zur Drohne hat bzw. haben muss.

In der Regel wird die Transportbox in der Bodenstation für eine gewisse Zeit in einem Lagerplatz zwischengelagert, bis die Transportbox oder deren Inhalt an dem Übergabeplatz ausgegeben werden soll, oder die Transportbox wieder an eine Drohne übergeben werden soll. Für die Zwischenlagerung weist die Bodenstation daher mehrere Lagerplätze auf, in denen jeweils eine Transportbox gelagert werden kann.

Das Handling der Transportbox innerhalb der Bodenstation - also zwischen den Lagerplätzen, dem Übergabeplatz und der Drohne - übernimmt in der Regel ein aufwendiges Transportsystem. Ein solches Transportsystem kann beispielsweise aus mehreren Linearführungen, Fördereinrichtungen wie Rollen- und Bandförderern, Greifern und/oder Führungsbahnen zusammengesetzt sein, oder durch einen Roboterarm realisiert werden, welcher drei oder mehr Freiheitsgrade aufweist. Solche Transportsysteme sind sehr kostspielig, aufwendig in der Konstruktion und Wartung, und nehmen zudem viel Raum ein.

Ein weiterer Nachteil bekannter Bodenstationen, Systemen bzw. Verfahren ist, dass das Zusammenspiel zwischen der Bodenstation und der Drohne zum Be- und/oder Entladen der Drohne aufwändig oder fehleranfällig ist. Auch das Zusammenspiel zwischen dem Nutzer und der Bodenstation zum Aufgeben bzw. Entnehmen von zu transportierenden bzw. transportierten Gegenständen in die Bodenstation bzw. von der Bodenstation ist oft aufwändig oder fehleranfällig. Der dauerhafte Betrieb bekannter Bodenstationen, Systeme bzw. Verfahren ist oft personal- und wartungsintensiv.

Die zugrundeliegende Aufgabe der Erfindung ist es daher, eine Bodenstation, ein System und ein Verfahren bereitzustellen, welche einen geringen Platzbedarf aufweisen, sowie im Vergleich zum Stand der Technik einen vereinfachten Aufbau, bzw. welche zumindest hinsichtlich eines der genannten Nachteile verbessert sind.

Diese Aufgabe wird durch die Gegenstände mit den Merkmalen der unabhängigen Ansprüche 1, 12 und 14 gelöst. Weitere, besonders vorteilhafte Ausgestaltungen der Erfindung offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich. Alle in Zusammenhang mit der Bodenstation offenbarten Merkmale können daher Merkmale des Systems bzw. Verfahrens sein und umgekehrt.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Erfindungsgemäß ist eine Bodenstation zum automatischen Be- und Entladen einer zum Transport einer Transportbox eingerichteten Drohne eingerichtet, wobei die Bodenstation wenigstens einen Be- und/oder Entladeplatz für die Drohne, wenigstens einen Lagerplatz zur Lagerung von jeweils einer Transportbox, und wenigstens einen Übergabeplatz zur Ausgabe und/oder Annahme der Transportbox oder deren Inhalts aufweist.

Die Bodenstation weist bevorzugt wenigstens einen weiteren Be- und/oder Entladeplatz, und/oder wenigstens einen weiteren Lagerplatz, und/oder wenigstens einen weiteren Übergabeplatz auf.

In einer Ausführungsform weist die Bodenstation genau einen Be- u. Entladeplatz, genau einen Lagerplatz und genau einen Übergabeplatz auf. Vorzugsweise ist zusätzlich hierzu mindestens ein weiterer Be- u. Entladeplatz oder Lagerplatz oder Übergabeplatz vorgesehen. Es sind bevorzugt also mindestens vier Plätze der drei Platzarten Be- und/oder Entladeplatz, Lagerplatz, und Übergabeplatz vorgesehen. Bevorzugt sind mindestens vier Plätze der drei Platzarten Be- und/oder Entladeplatz, Lagerplatz, und Übergabeplatz in einer, vorzugsweise vertikalen, Ebene angeordnet.

Des Weiteren weist die Bodenstation ein Transportsystem auf. Das Transportsystem ist zum Transport der Transportbox innerhalb der Bodenstation eingerichtet, bevorzugt zwischen mindestens vier Plätzen der drei Platzarten Be- und/oder Entladeplatz, Lagerplatz, und Übergabeplatz.

Das Transportsystem ist bevorzugt zur Abgabe der Transportbox an die Drohne beim Beladen der Drohne, und/oder zur Aufnahme der Transportbox von der Drohne beim Entladen der Drohne eingerichtet, wobei sich die Drohne beim Beladen und Entladen vorteilhafterweise auf dem wenigstens einen Be- und/oder Entladeplatz bzw. auf einem der Be- und/oder Entladeplätze befindet.

Das Transportsystem ist bevorzugt ebenfalls zur Abgabe der Transportbox an den wenigstens einen Lagerplatz und/oder den wenigstens einen Übergabeplatz sowie zur Entnahme einer Transportbox aus dem wenigstens einen Lagerplatz und/oder aus dem wenigstens einen Übergabeplatz eingerichtet. Bevorzugt ist das Transportsystem zur Abgabe der Transportbox an alle Lagerplätze und alle Übergabeplätze sowie zur Entnahme einer Transportbox aus bzw. von allen Lagerplätzen und allen Übergabeplätzen eingerichtet.

Bevorzugt ist die Formulierung "Entnahme" der Transportbox "aus" der Drohne gleichbedeutend mit der Formulierung "Aufnahme" der Transportbox "von" der Drohne. Gleiches gilt hinsichtlich des Lagerplatzes und Übergabeplatzes.

Die Bodenstation zeichnet sich bevorzugt dadurch aus, dass der wenigstens eine Lagerplatz, der wenigstens eine Übergabeplatz und der wenigstens eine Be- und/oder Entladeplatz derart relativ zueinander angeordnet sowie derart eingerichtet sind, dass die Transportbox zwischen dem wenigstens einen Lagerplatz, dem wenigstens einen Übergabeplatz und dem wenigstens einen Be- und/oder Entladeplatz durch Verfahren des Transportsystems in zwei Dimensionen transportierbar ist. Weiter bevorzugt zeichnet sich die Bodenstation dadurch aus, dass alle Lagerplätze, alle Übergabeplätze und alle Be- und/oder Entladeplätze derart relativ zueinander angeordnet sowie derart eingerichtet sind, dass die Transportbox zwischen allen Lagerplätzen, allen Übergabeplätzen und allen Be- und/oder Entladeplätzen durch Verfahren des Transportsystems in zwei Dimensionen transportierbar ist.

Bevorzugt ist das Transportsystem dazu eingerichtet in maximal zwei Dimensionen zu verfahren.

Der Einfachheit halber werden innerhalb der vorliegenden Anmeldung die Lagerplätze, die Übergabeplätze, und die Be- und/oder Entladeplätze stellenweise im Singular beschrieben, statt im Plural. Dabei können genau ein Lagerplatz, ein Übergabeplatz, oder ein Be- und/oder Entladeplatz, oder wenigstens zwei, oder mehrere bzw. alle Lagerplätze, Übergabeplätze, oder Be- und/oder Entladeplätze wie beschrieben ausgebildet sein.

Die Bodenstation ist bevorzugt zum vollautomatischen Be- und Entladen der Drohne eingerichtet. Das bedeutet in diesem Zusammenhang, dass die Transportbox von der Drohne beim Entladen der Drohne ohne das Zutun eines Menschen von der Bodenstation entgegengenommen werden kann, und auch ohne das Zutun eines Menschen beim Beladen der Drohne an die Drohne übergeben werden kann. Auch die Einlagerung und Entnahme der Transportboxen in bzw. aus den Lagerplätzen, bzw. die Abgabe an und die Aufnahme von den Lagerplätzen erfolgt analog bevorzugt vollautomatisch.

Die Drohne, welche auch als Transportdrohne bezeichnet werden kann, kann grundsätzlich jedes Fluggerät sein, welches dazu eingerichtet ist, eine entsprechende Transportbox über den Luftweg zu transportieren. Eine Drohne kann also beispielsweise ein Hubschrauber, ein Multikopter, ein Flugzeug mit Tragflächen oder dergleichen sein. Auch Kombinationen aus den vorgenannten Fluggeräten sind möglich. Insbesondere können Fluggeräte mit Vertikalstart- und Vertikallande-Eigenschaften von Vorteil sein, z.B. ein sogenanntes "electric Vertical Take-Off and Landing Aircraft" (kurz: eVTOL). Mit einem eVTOL wird im Rahmen dieser Druckschrift insbesondere ein elektrisch angetriebenes, vertikal startendes und landendes Fluggerät bezeichnet, das, oft zusätzlich zu einem oder mehreren, um eine zumindest nahezu vertikale Achse drehenden Rotor, mindestens eine starre Tragfläche aufweist. Das eVTOL kann zusätzlich oder alternativ zu dem mindestens einen, um eine zumindest nahezu vertikale Achse drehenden Rotor mindestens einen, um eine zumindest nahezu horizontale Achse drehenden Propeller umfassen. Die Drohne kann einen Auftriebsmotor umfassen, der mit dem Rotor wirkverbunden ist. Die Drohne kann einen Vortriebsmotor umfassen, der mit dem Propeller wirkverbunden ist. Bevorzugt sind Drohnen, die den Flugbetrieb vollständig automatisch ausführen können.

Beim Be- und/oder Entladen befindet sich die Drohne vorzugsweise auf einem Be- und/oder Entladeplatz, welcher bevorzugt an, auf oder in der Bodenstation angeordnet ist. Insbesondere ist der Be- und/oder Entladeplatz auf einer Oberseite der Bodenstation angeordnet, vorzugsweise derart, dass die Drohne in einer im Wesentlichen vertikal verlaufenden Bewegung auf dem Be- und/oder Entladeplatz landen und/oder starten kann.

Der Be- und/oder Entladeplatz kann beispielsweise als eine ebene Fläche auf einer Oberseite der Bodenstation ausgeführt sein.

Alternativ kann der Be- und/oder Entladeplatz innerhalb der Bodenstation nach Art einer Garage angeordnet sein. Hierdurch kann der Be- und/oder Entladeplatz besonders gut, z.B. vor Umwelteinflüssen wie beispielsweise Regen, geschützt sein. Die Bodenstation kann ein Tor umfassen, das ähnlich ausgebildet sein kann, wie ein Garagentor.

Der Be- und/oder Entladeplatz ist vorzugsweise derart eingerichtet, dass ein physischer Kontakt der Drohne, welche auf dem Be- und/oder Entladeplatz angeordnet ist, zu Passanten in der Nähe der Bodenstation nicht möglich ist. Auf diese Weise wird die Sicherheit der Passanten beim Landen, Starten und Parken der Drohne gewährleistet, und dadurch die Akzeptanz der Passanten gegenüber einem solchen Transportkonzept erhöht. Dazu kann die Bodenstation beispielsweise eine Einfassung aus Wand-, Gitter-, und/oder Zaunelementen um den Be- und/oder Entladeplatz herum aufweisen.

Alternativ oder ergänzend zu der Einfassung ist der Be- und/oder Entladeplatz entsprechend hoch an der Bodenstation angeordnet, insbesondere oberhalb einer Höhe von 2,5 m über einem Untergrund, auf dem die Bodenstation angeordnet ist, so dass Personen, die auf dem Untergrund stehen, die Drohne nicht ohne Weiteres erreichen können.

Es können bevorzugt statt einem Be- und/oder Entladeplatz auch mehrere Be- und/oder Entladeplätze vorgesehen sein. Dadurch können mehrere Drohnen gleichzeitig von der Bodenstation abgefertigt werden.

Bevorzugt verbleibt die Drohne auf dem Be- und/oder Entladeplatz, wenn die Drohne nicht mit einer Transportbox beladen ist.

Die Bodenstation weist zur Zwischenlagerung von mit Gegenständen beladenen Transportboxen und zum Vorhalten leerer Transportboxen einen oder mehrere Lagerplätze innerhalb der Bodenstation auf. Die Lagerplätze können bevorzugt jeweils eine Transportbox aufnehmen. Bevorzugt weist die Bodenstation mindestens zwei, mindestens drei, oder mindestens vier Lagerplätze auf.

Die Bodenstation kann wenigstens einen Übergabeplatz, bevorzugt zwei Übergabeplätze aufweisen. Wenn genau ein Übergabeplatz vorgesehen ist, dann kann der Aufbau vereinfacht sein. Der Übergabeplatz ist bevorzugt dazu eingerichtet, die Transportbox und/oder den Inhalt der Transportbox - also die durch die Transportbox transportierten Gegenstände - an eine Person außerhalb der Bodenstation auszugeben. Besonders bevorzugt ist der Übergabeplatz dazu eingerichtet, nur den Inhalt der Transportbox - und nicht die Transportbox selbst - an eine Person außerhalb der Bodenstation auszugeben bzw. zur Entnahme durch eine Person außerhalb der Bodenstation bereitzustellen. Vorzugsweise ist die Bodenstation dazu eingerichtet, während des normalen Betriebs, eine Positionierung der Transportbox innerhalb der Bodenstation oder an der Drohne zu bewirken. Bevorzugt verbleibt die Transportbox während des normalen Betriebs also stets in der Bodenstation, wenn sie nicht an der Drohne angeordnet ist. Statt an eine Person kann die Transportbox oder deren Inhalt auch an ein externes Transportsystem oder ein Labor oder dergleichen ausgegeben werden. Die Bodenstation ist dann bevorzugt direkt oder indirekt über ein externes Transportsystem an ein Labor zur Übergabe der Transportboxen oder deren Inhalt angeschlossen. Sofern die Transportbox oder die Gegenstände an der Bodenstation ausgegeben werden sollen, transportiert das Transportsystem die gewünschte Transportbox zum Übergabeplatz. Dort kann entweder die gesamte Transportbox oder, wie besonders bevorzugt, lediglich deren Inhalt aus dem Übergabeplatz und damit aus der Bodenstation entnommen werden.

Bevorzugt ist der mindestens eine Akku der Drohne in der Transportbox angeordnet.

Der Übergabeplatz kann gleichzeitig auch dazu dienen Transportboxen oder Gegenstände, die mithilfe der Transportbox transportiert werden sollen, entgegenzunehmen. Dazu wird bevorzugt eine insbesondere leere Transportbox von der Bodenstation in dem Übergabeplatz bereitgestellt, so dass diese mit den zu transportierenden Gegenständen befüllt werden kann. Mit dem Begriff "leere Transportbox" wird im Rahmen dieser Offenbarung vorzugsweise sowohl eine vollständig leere Transportbox als auch eine ausschließlich mit einem Akku für die Drohne gefüllte Transportbox bezeichnet. Die leere Transportbox kann bis zum Gebrauch beispielsweise in einem der Lagerplätze bereitgehalten werden.

Alternativ kann auch eine bereits mit den zu transportierenden Gegenständen befüllte Transportbox mithilfe des Übergabeplatzes entgegengenommen werden.

Ist die Transportbox durch den Übergabeplatz entgegengenommen worden, bzw. mit zu transportierenden Gegenständen befüllt worden, so wird bevorzugt die Transportbox durch das Transportsystem innerhalb der Bodenstation transportiert und entweder in einen freien Lagerplatz übergeben oder direkt zum Be- und/oder Entladeplatz transportiert.

Um die Transportbox zwischen dem wenigstens einen Lagerplatz, dem wenigstens einen Übergabeplatz, und dem wenigstens einen Be- und/oder Entladeplatz zu transportieren, also innerhalb der Bodenstation zu bewegen, weist die Bodenstation ein Transportsystem auf. Das Transportsystem ist dazu eingerichtet, die Transportbox von der Drohne entgegenzunehmen und/oder an die Drohne zu übergeben. Anders ausgedrückt ist das Transportsystem bevorzugt dazu eingerichtet, die Transportbox von der Drohne aufzunehmen und/oder an die Drohne abzugeben. Dazu weist das Transportsystem bevorzugt eine Aufnahme für die Transportbox, bevorzugt also eine Transportbox-Aufnahme auf und ist weiter bevorzugt in zwei Raumachsen verfahrbar, vorzugsweise ausschließlich.

Bevorzugt umfasst das System mindestens eine Befestigungsvorrichtung und die Drohne ist weiter bevorzugt dazu eingerichtet, die Transportbox mithilfe der mindestens einen Befestigungsvorrichtung aufzunehmen.

Das Transportsystem kann zudem eine Betätigungseinrichtung aufweisen, welche dazu eingerichtet ist, die Transportbox von der Drohne zu lösen bzw. zu entriegeln und/oder die Transportbox mit der Drohne zu verbinden bzw. zu verriegeln. Es kann aber auch vorgesehen sein, dass die Drohne das Lösen und/oder Verbinden bzw. das Entriegeln und/oder das Verriegeln eigenständig und vorzugsweise in Abstimmung mit dem Transportsystem vornimmt. Die Betätigungseinrichtung kann auch dazu eingerichtet sein, die Transportbox von dem Lagerplatz zu lösen bzw. zu entriegeln und/oder die Transportbox mit dem Lagerplatz zu verbinden bzw. zu verriegeln. In einer bevorzugten Ausführungsform ist die Betätigungseinrichtung - bevorzugt ausschließlich - dazu eingerichtet, Komponenten der Befestigungsvorrichtung voneinander zu entriegeln, bzw. eine Verriegelung in einen entriegelten Zustand zu bringen, z. B. um eine Aufnahme der Transportbox durch das Transportsystem zu ermöglichen.

Die Erfindung zeichnet sich bevorzugt dadurch aus, dass der wenigstens eine Lagerplatz, der wenigstens eine Übergabeplatz, und der wenigstens eine Be- und/oder Entladeplatz derart relativ zueinander angeordnet und eingerichtet sind, dass die Transportbox zwischen dem wenigstens einen Lagerplatz, dem wenigstens einen Übergabeplatz, und dem wenigstens einen Be- und/oder Entladeplatz durch Verfahren des Transportsystems in zwei Dimensionen transportierbar ist. Der wenigstens eine Lagerplatz, der wenigstens eine Übergabeplatz, und der wenigstens eine Be- und/oder Entladeplatz können dazu beispielsweise entlang einer Ebene, welche insbesondere vertikal ausgerichtet ist, angeordnet sein, beispielsweise ausschließlich. Bei einer vertikalen Ausrichtung der Ebene wird die Ebene durch die Y-Richtung und Z-Richtung eines kartesischen Koordinatensystems aufgespannt. Auf diese Weise kann das Transportsystem bevorzugt jeden Lagerplatz, jeden Übergabeplatz, und jeden Be- und/oder Entladeplatz durch Verfahren in einer Y-Richtung (entspricht der ersten Dimension) und einer Z-Richtung (entspricht der zweiten Dimension) erreichen, ohne dabei in einer X-Richtung (entspricht einer dritten Dimension) verfahren zu müssen. Die Richtungen sind dabei bezogen auf ein kartesisches Koordinatensystem.

Bevorzugt sind wenigstens zwei Lagerplätze relativ zueinander in wenigstens zwei zueinander senkrecht verlaufenden Raumrichtungen versetzt zueinander angeordnet, beispielsweise in Y-Richtung und in Z-Richtung.

Bevorzugt sind wenigstens drei Lagerplätze in der Bodenstation vorhanden, wobei ein erster Lagerplatz in Y-Richtung versetzt zu einem zweiten Lagerplatz angeordnet ist, und wobei ein dritter Lagerplatz in Z-Richtung versetzt zu dem zweiten Lagerplatz angeordnet ist.

Weiter bevorzugt sind die Lagerplätze in einem Muster angeordnet, wobei das Muster wenigstens zwei Reihen gebildet aus jeweils wenigstens zwei Lagerplätzen umfasst, sowie wenigstens zwei Spalten gebildet aus jeweils wenigstens zwei Lagerplätzen. Das Muster der Lagerplätze kann sich in einer vertikalen Ebene erstrecken, so dass die Lagerplätze in vertikaler Richtung (Z-Richtung) und/oder horizontaler Richtung (Y-Richtung) zueinander versetzt angeordnet sind.

Mindestens zwei oder alle Lagerplätze sind bevorzugt derart relativ zueinander angeordnet, dass diese Lagerplätze allesamt zugänglich sind, unabhängig davon, ob sich in den Lagerplätzen Transportboxen befinden, oder nicht. Mit anderen Worten blockiert eine in einem Lagerplatz befindliche Transportbox nicht den Zugang zu einem der anderen Lagerplätze. Zugänglich bedeutet in diesem Zusammenhang insbesondere, dass das Transportsystem den Lagerplatz erreichen kann, und eine Transportbox in den leeren Lagerplatz einführen kann bzw. eine Transportbox aus dem belegten Lagerplatz entnehmen kann.

Bezüglich der zuvor beschriebenen räumlichen Anordnungen der Lagerplätze können auch ein oder mehrere Lagerplätze durch ein oder mehrere Übergabeplätze und/oder Be- und/oder Entladeplätze ersetzt sein, so dass der/die Übergabeplätze bzw. der/die Be- und/oder Entladeplätze entsprechend Teil der beschriebenen räumlichen Anordnungen sein können.

In einer Ausführungsform der Bodenstation weist wenigstens ein Lagerplatz, bevorzugt alle Lagerplätze, eine Lagerplatz-Öffnung auf, welche derart eingerichtet ist, dass die Transportbox von unten durch die jeweilige Lagerplatz-Öffnung von dem Transportsystem in den Lagerplatz ein- und ausführbar ist.

Die Lagerplatz-Öffnung ist bevorzugt derart am Lagerplatz, insbesondere an einer Unterseite des Lagerplatzes, angeordnet, dass der Lagerplatz nach unten offen ausgebildet ist. Auf diese Weise kann die Transportbox bevorzugt in einer im Wesentlichen vertikalen Bewegung von unten nach oben in den Lagerplatz eingeführt werden, und in einer im Wesentlichen vertikalen Bewegung von oben nach unten aus dem Lagerplatz heraus bewegt werden.

Bei nach unten offen ausgeführten Lagerplätzen bietet es sich vorzugsweise an, den Raum unterhalb der Lagerplätze derart freizulassen, dass eine Transportbox von dem Transportsystem zunächst in eine Position unterhalb des entsprechenden Lagerplatzes transportiert werden kann, und von dort aus von dem Transportsystem in den Lagerplatz eingeführt werden kann.

Es ist denkbar, dass die einem Lagerplatz zugehörigen Vorrichtungen beispielsweise eine im Wesentlichen zweidimensionale Erstreckung aufweisen bzw. entlang einer - bevorzugt horizontalen - Ebene angeordnet sind. Die einem Lagerplatz zugehörigen Vorrichtungen können dazu eingerichtet sein, eine Transportbox an dem Lagerplatz zu lagern. Der Lagerplatz kann sich dann über die Vorrichtungen des Lagerplatzes hinweg auch über ein freies Volumen unterhalb der Vorrichtungen des Lagerplatzes erstrecken. Beispielsweise kann der Lagerplatz eine im Wesentlichen plattenartige Vorrichtung umfassen, an die die Transportbox von unten herangeführt und an der die Transportbox befestigt wird. Der Lagerplatz kann alternativ oder zusätzlich mehrere Befestigungsvorrichtungs-Komponenten aufweisen. Die Befestigungsvorrichtungs-Komponenten des Lagerplatzes sind bevorzugt ortsfest in der Bodenstation angeordnet und definieren die Position des Lagerplatzes. Die Bodenstation weist bevorzugt also eine begrenzte Anzahl an Lagerplätzen auf, deren Position in der Bodenstation ortsfest und unveränderlich ist. Die Befestigungsvorrichtungs-Komponenten des Lagerplatzes sind bevorzugt entlang einer - vorzugsweise horizontalen - Ebene angeordnet. Der Lagerplatz umfasst dann vorzugsweise die plattenartige Vorrichtung bzw. die Befestigungsvorrichtungs-Komponenten sowie das freie Volumen unterhalb der plattenartigen Vorrichtung bzw. der Befestigungsvorrichtungs-Komponenten, wobei das freie Volumen bevorzugt im Wesentlichen den Abmessungen einer Transportbox entspricht. Auch in einer solchen Ausführung ist der Lagerplatz als nach unten offen ausgeführt anzusehen. Die Lagerplatz-Öffnung kann dann der gedachte Übergang zwischen dem freien Volumen und dem unterhalb des freien Volumens angeordneten Bereichs der Bodenstation sein.

Bevorzugt umfasst die Transportbox einen Stecker und die Drohne und /oder der Lagerplatz einen Gegenstecker. Vorzugsweise ist der Stecker mit dem Gegenstecker zum Bilden einer Steckverbindung steckbar. Der Stecker ist bevorzugt an der Transportbox befestigt, vorzugsweise schwimmend gelagert. Die Befestigung des Steckers ist bevorzugt dazu eingerichtet, Kräfte aufzunehmen, die größer sind als die zum Verbinden und Trennen des Steckers mit dem Gegenstecker erforderlichen Kräfte. Hierdurch ist eine Voraussetzung dafür geschaffen, dass die zum Verbinden und Trennen der Steckverbindung erforderlichen Kräfte in die Transportbox eingeleitet werden können. Der Gegenstecker ist bevorzugt an der Drohne befestigt, vorzugsweise schwimmend gelagert. Ein weiterer Gegenstecker ist bevorzugt an dem Lagerplatz befestigt, vorzugsweise schwimmend gelagert. Der Gegenstecker der Drohne und der Gegenstecker des Lagerplatzes sind bevorzugt gleich. Der Stecker ist bevorzugt mit dem in der Transportbox angeordneten Akku elektrisch verbunden. Vorzugsweise ist durch Verbinden des Steckers mit dem Gegenstecker der Drohne die Drohne mit dem Akku elektrisch verbindbar. Vorzugsweise kann durch Verbinden des Steckers mit dem Gegenstecker des Lagerplatzes der Akku geladen werden. Bevorzugt erfolgt ein Stecken des Steckers mit dem Gegenstecker der Drohne durch die Abgabe der Transportbox an die Drohne. Bevorzugt erfolgt ein Stecken des Steckers mit dem Gegenstecker des Lagerplatzes durch die Abgabe der Transportbox an den Lagerplatz. Ein Trennen des Steckers von dem Gegenstecker erfolgt bevorzugt durch die mit Hilfe des Transportsystems erfolgende Aufnahme der Transportbox von der Drohne bzw. dem Lagerplatz.

Das Transportsystem umfasst bevorzugt eine Transportbox-Aufnahme, mithilfe derer die Transportbox von dem Transportsystem aufgenommen werden kann. Die Transportbox-Aufnahme ist bevorzugt zusätzlich und separat zu der Befestigungsvorrichtung vorgesehen. Eine solche Transportbox-Aufnahme kann bevorzugt eine formschlüssige, kraftschlüssige, und/oder reibschlüssige Verbindung zu der Transportbox aufbauen. Die Verbindung ist unabhängig von der Verbindungsart lösbar ausgeführt. Eine solche Transportbox-Aufnahme kann dazu beispielsweise eine Auflagefläche umfassen, auf der die Transportbox abgelegt werden kann. Dazu kann bevorzugt eine Unterseite der Transportbox auf einer Oberseite der Transportbox-Aufnahme angeordnet werden. Auch ein Greifer zum Greifen der Transportbox, sowie eine Kombination aus Auflagefläche und Greifer ist denkbar bzw. kann von der Transportbox-Aufnahme umfasst sein. Der Greifer kann mindestens einen Haken umfassen, der mit der Transportbox verbindbar ist. Der Greifer kann mindestens einen Pin umfassen, der zum seitlichen Eingriff in eine komplementäre Aussparung der Transportbox eingerichtet ist und auf diese Weise eine formschlüssige Verbindung zu der Transportbox aufbauen kann. Die Transportbox-Aufnahme kann dazu eingerichtet sein, die Transportbox während der Aufnahme in der Transportbox-Aufnahme zu zentrieren, bzw. exakt zu positionieren. Dies kann durch mindestens zwei von gegenüberliegenden Seiten auf die Transportbox wirkende Greifer erfolgen. Hierdurch können die Anforderungen an die Positionierungsgenauigkeit der Transportbox-Aufnahme relativ zur Transportbox vor der Aufnahme reduziert sein.

Die Transportbox-Aufnahme bzw. der Greifer kann mit der Betätigungseinrichtung des Transportsystems gekoppelt sein, vorzugsweise mechanisch. Ein Aktivieren der Betätigungseinrichtung zur Entriegelung von Komponenten der Befestigungsvorrichtung kann zwangsweise eine Aktivierung der Transportbox-Aufnahme bzw. des Greifers bewirken und z. B. ein Aufbauen der formschlüssigen, kraftschlüssigen, und/oder reibschlüssigen Verbindung zu der Transportbox. Bevorzugt ist hierdurch - vorzugsweise durch konstruktive Mittel, die bevorzugt keine Steuerung oder von außen erfolgte Betätigung erfordern - sichergestellt, dass die Transportbox-Aufnahme vor einem Aufnehmen der Transportbox von der Drohne bzw. dem Lagerplatz bzw. vor der Entriegelung von Komponenten der Befestigungsvorrichtung eine Verbindung zu der Transportbox aufgebaut hat. Vorzugsweise ist die Transportbox-Aufnahme bzw. der Greifer dazu eingerichtet, zum Aufnehmen der Transportbox von der Drohne bzw. dem Lagerplatz eine Zugkraft auf die Transportbox auszuüben, vorzugsweise nach unten, also in Richtung der Gewichtskraft der Transportbox. Bevorzugt ist die Zugkraft größer als die zum Trennen des Steckers von dem Gegenstecker erforderlichen Kraft. Besonders bevorzugt ist die Zugkraft zusammen mit der Gewichtskraft der leeren bzw. gefüllten Transportbox größer als die zum Trennen des Steckers von dem Gegenstecker erforderlichen Kraft.

In einer weiteren Ausführungsform der Bodenstation ist der wenigstens eine Lagerplatz derart eingerichtet, dass die Transportbox im Lagerplatz hängend aufnehmbar ist. Hängend bedeutet in diesem Zusammenhang, dass die Transportbox nicht auf einer festen Unterlage, wie beispielsweise einem Regalbrett, aufliegt, sondern im Lagerplatz hängend befestigt ist, bevorzugt ohne dabei eine direkte Unterstützung des Lagerplatzes von unten zu erfahren.

Die Drohne weist bevorzugt einen Laderaum auf. Der Laderaum ist bevorzugt von Wänden der Drohne umgeben und durch diese definiert. Der Laderaum ist bevorzugt zu einer Seite, vorzugsweise unten, offen, um die Transportbox von unten in den Laderaum einführen zu können. Wenn die Transportbox sowohl in den Lagerplatz als auch in die Drohne von unten einführbar ist, dann kann das Transportsystem vereinfacht sein.

Die Transportbox und die Drohne sind bevorzugt so ausgebildet, dass die Transportbox in der Drohne, bevorzugt in dem Laderaum der Drohne, anordenbar ist, vorzugsweise derart, dass die Transportbox von allen Seiten mit Ausnahme der Unterseite, zumindest nahezu vollständig von der Drohne umgeben ist. Bevorzugt macht das Volumen des Laderaums mehr als die Hälfte des Volumens der Drohne aus. Die Drohne ist bevorzugt um den Laderaum herum konstruiert. Bevorzugt ist bei in der Drohne angeordneter Transportbox ein Formschluss zwischen Drohne - z. B. den den Laderaum begrenzenden Wänden - und Transportbox ausgebildet, der eine Relativbewegung der Transportbox zur Drohne in allen drei rotatorischen und allen drei translatorischen Freiheitsgraden sperrt oder begrenzt, mit Ausnahme genau eines translatorischen Freiheitsgrades in genau eine Richtung, vorzugsweise nach unten, bei horizontal angeordneter Drohne vorzugsweise also in Richtung der Gewichtskraft. Hierdurch ist eine einfache und zuverlässige Verbindung der Transportbox an der Drohne möglich. Bevorzugt ist die Windangriffsfläche der Drohne durch die an bzw. in ihr angeordnete Transportbox nicht vergrößert. Die Transportbox stört den Flug der Drohne daher auch bei windigen Bedingungen nur geringstmöglich.

In einer bevorzugten Ausführungsform ist die Transportbox als Träger bzw. Carrier ausgebildet, der einen Stauraum bzw. Ladebereich nach unten und seitlich begrenzt, nach oben jedoch offen lässt. Die Transportbox kann in etwa die Form eines Schuhkartons ohne Deckel haben. Die Transportbox weist bevorzugt also keinen Deckel auf bzw. ist oben offen. Ein Schließen der Transportbox bzw. ihres Ladebereichs erfolgt bevorzugt ausschließlich durch das Anordnen der Transportbox in der Drohne. Bevorzugt wird die Transportbox durch das Anordnen an der Drohne gleichzeitig und vorzugsweise ohne weiteres Zutun verschlossen, besonders bevorzugt wasserdicht. Die Drohne kann an ihrer Unterseite zu diesem Zweck eine Aussparung aufweisen, deren Form zumindest in etwa der Transportbox entspricht und die etwas größer ist als diese, so dass die Drohne über die Transportbox stülpbar ist, bevorzugt derart, dass die Unterseite der Transportbox zumindest nahezu bündig mit der umgebenden Unterseite der Drohne abschließt. Diese Aussparung bzw. der diese Aussparung umgebende Bereich der Drohne bildet bevorzugt den Laderaum der Drohne. Bevorzugt erfolgt das Stülpen durch eine Bewegung der Transportbox auf die Drohne zu und nicht umgekehrt. Vorzugsweise ist die Transportbox bzw. ihr Ladebereich stets oben offen, wenn sie nicht in der Drohne angeordnet ist.

Es hat sich gezeigt, dass eine Transportbox, die, wenn sie nicht an der Drohne angeordnet ist, stets oben offen ist, das Einladen und das Entnehmen von zu transportierenden Gegenständen vereinfacht. Und wenn mit der Abgabe der Transportbox an die Drohne das - bevorzugt wasserdichte - Verschließen der Transportbox gleichzeitig und ohne weiteres Zutun erfolgt, dann kann auf einen zu steuernden Verschlussmechanismus der Transportbox, wie bevorzugt, verzichtet sein.

Vorzugsweise verschließt die Transportbox, indem ihre Unterseite, wenn sie in der Drohne angeordnet ist, zumindest nahezu bündig mit der umgebenden Unterseite der Drohne abschließt, die Drohne, so dass ein Laderaum-Verschlussmechanismus entbehrlich ist.

Die Verbindung zwischen Transportbox und Lagerplatz zur hängenden Aufnahme erfolgt dabei bevorzugt oberhalb eines Schwerpunktes der Transportbox. Dazu kann die Transportbox oberhalb ihres Schwerpunktes, beispielsweise in einer oberen Hälfte der Transportbox, insbesondere auf einer Oberseite der Transportbox, Halteeinrichtungen aufweisen, welche wiederum mit entsprechenden Aufnahmen des Lagerplatzes zusammenwirken, um die Transportbox in dem Lagerplatz hängend zu befestigen. Vorzugsweise können diese Aufnahmen jeweils auch als Befestigungsmechanismus bezeichnet werden. Die Halteeinrichtungen der Transportbox bilden bevorzugt einen obersten Teil der Transportbox aus.

In einer weiteren Ausführungsform der Bodenstation weist wenigstens einer der Lagerplätze eine Stromversorgung zur Versorgung der Transportbox mit Strom auf, insbesondere zum Laden eines Akkus der Transportbox. Durch die bevorzugt ortsfeste Anordnung der begrenzten Zahl an Ladeplätzen kann dies erleichtert sein. Es kann vorgesehen sein, dass die Transportbox einen Akku umfasst, welcher während der Lagerung der Transportbox im Lagerplatz aufgeladen werden kann. Ein solcher Akku kann als Flugakku zur Versorgung der Drohne mit Energie während des Fluges ausgeführt sein und/oder zur Stromversorgung elektrischer Komponenten der Transportbox dienen. Bevorzugt weisen alle Lagerplätze eine Stromversorgung zum Laden des Akkus der Transportbox auf. Die Lagerplätze können daher bevorzugt als Lager- und Ladeplätze bezeichnet werden. Bevorzugt sind alle im Rahmen dieser Druckschrift erwähnten Akkus Flugakkus, mit Ausnahme des Temperierakkus und des Kühlakkus.

In der Transportbox kann eine Trennwand vorgesehen sein, die einen Ladebereich und einen Akkubereich der Transportbox voneinander trennt. Der Akkubereich kann dazu eingerichtet sein, einen Akku bzw. mehrere Akkus bis zum Erreichen des Endes der Lebensdauer der Akkus sicher aufzunehmen. Vorzugsweise weist die Transportbox zu diesem Zweck Akkubefestigungsmittel auf, z. B. Klettstreifen. Vorzugsweise sind die Stecker und/oder die Gegenstecker senkrecht zur Steckrichtung schwimmend gelagert, um geringfügige Positionierungsabweichungen der Transportbox auszugleichen. Bevorzugt stimmt die Steckrichtung der Stecker mit ihren Gegensteckern mit der Richtung überein, in der die Transportbox bei ihrer Abgabe an die Drohne bzw. den Lagerplatz von dem Transportsystem bewegt wird.

Die Transportbox kann zur Aufnahme von zwei - bevorzugt gleichen - Akkus eingerichtet sein. Die Transportbox kann zwei Stecker umfassen, zur separaten Verbindung der beiden Akkus mit der Drohne. Hierdurch können wichtige Komponenten der Drohne redundant mit Strom versorgt werden bzw. zweifach an der Drohne vorgesehen sein, mit eigener Stromversorgung.

Vorzugsweise ist das Transportsystem zum Tausch der Transportbox der Drohne und zum gleichzeitig damit erfolgenden Tausch des oder der Flugakkus der Drohne eingerichtet.

Indem der mindestens eine Akku in der Transportbox angeordnet ist, ist einerseits vermieden, dass die Drohne während der Akkuladezeit nicht fliegen kann. Indem die Transportbox, wie bevorzugt, dazu eingerichtet ist, dass der mindestens eine Akku bis zum Endes seiner Lebensdauer in derselben Transportbox angeordnet ist, ist die Komplexität und Störungsanfälligkeit des Systems geringer als bei einer denkbaren Akkutauschvorrichtung unabhängig oder zusätzlich zu dem die Transportboxen tauschenden Transportsystem. Indem die Transportboxen, wie bevorzugt, ständig im System verbleiben, sind zudem die Akkus vor versehentlicher unsachgemäßer Behandlung (Hitze, Erschütterung) des Nutzers geschützt.

Die Wände der Transportbox können thermisch isoliert sein. Der Akkubereich kann eine Abdeckung aufweisen. Es kann also lediglich der Ladebereich der Transportbox stets oben offen sein. Auch ein Bereich des Laderaums der Drohne kann thermisch isoliert sein und zusammen mit der thermischen Isolierung der Transportbox bei in der Drohne angeordneter Transportbox einen geschlossenen thermisch isolierten Raum bereitstellen.

Es ist denkbar, dass die Transportbox elektrische Komponenten wie beispielsweise Ortungs-Elektronik, Sensorik, Kommunikations-Elektronik, und/oder eine Temperiereinheit umfasst, welche durch den Akku und/oder durch die Stromversorgung des Lagerplatzes mit Strom versorgt werden können. Bevorzugt weist die Transportbox einen Luftfeuchtigkeitssensor und/oder einen Temperatursensor auf. Vorzugsweise ist sowohl in dem Akkubereich als auch in dem Ladebereich der Transportbox ein Luftfeuchtigkeitssensor und/oder einen Temperatursensor angeordnet.

Die Ortungs-Elektronik und/oder die Sensorik kann dazu eingerichtet sein, den Ort der Transportbox global zu bestimmen, zum Beispiel in Form von GPS-Koordinaten oder lokal innerhalb der Bodenstation. Lokal innerhalb der Bodenstation kann beispielsweise der Lagerplatz bestimmt werden, in welchem sich die Transportbox befindet.

Die Kommunikations-Elektronik kann dazu eingerichtet sein, mit der Bodenstation oder einer Zentrale beispielsweise drahtlos oder kabelgebunden zu kommunizieren. Es ist denkbar, dass die Transportbox über die Kommunikations-Elektronik Informationen bezüglich des Ortes (lokal und/oder global) austauscht, oder beispielsweise die Verweildauer im Lagerplatz, einen Akku-Ladezustand, und/oder eine voraussichtliche Ladezeit bis zum Erreichen eines gewünschten Ladezustands des Akkus übermittelt bzw. empfängt.

Es ist ebenfalls denkbar, dass die Transportbox und/oder die Lagerplätze eine Temperiereinheit zur Temperierung der Gegenstände in der Transportbox bzw. zur Temperaturkontrolle in der Transportbox aufweisen. Bevorzugt ist die Temperiereinheit dazu eingerichtet, die Temperatur der Nutzlast bzw. der Gegenstände in der Transportbox zu stabilisieren.

Die Stabilisierung der Temperatur kann dadurch erfolgen, dass ein Überschreiten einer Temperaturobergrenze und/oder ein Unterschreiten einer Temperaturuntergrenze der Nutzlast bzw. der Gegenstände in der Transportbox verhindert wird. Die Temperaturobergrenze und/oder Temperaturuntergrenze kann vorwählbar sein.

Die Temperiereinheit kann ein Wärme- bzw. Klimamodul umfassen.

Die Temperiereinheit kann ein aktives Wärme- bzw. Klimamodul umfassen. Bevorzugt kann die Temperiereinheit die Nutzlast bzw. die Gegenstände in der Transportbox dann aktiv kühlen oder erwärmen, vorzugsweise elektrisch, mittels eines Akkus. Dieser Akku kann der Flugakku bzw. einer der Flugakkus sein. Sofern, wie bevorzugt, die Temperiereinheit in bzw. an der Transportbox angeordnet ist, kann die Temperiereinheit von dem Akku der Transportbox und/oder von der Stromversorgung des Lagerplatzes mit Strom versorgt werden. Die Transportbox kann zur Stromversorgung der Temperiereinheit einen Temperierakku aufweisen, der kein Flugakku ist.

Zusätzlich oder alternativ zu dem aktiven Wärme- bzw. Klimamodul kann die Temperiereinheit ein passives Wärme- bzw. Klimamodul umfassen. Das passive Wärme- bzw. Klimamodul kommt vorzugsweise ohne eine Stromversorgung aus. Das passive Wärme- bzw. Klimamodul kann Wärmekapazitäten, z. B. ein Kühlpack, ein Kühlpad bzw. einen Kühlakku, aufweisen. Bevorzugt ist das passive Wärme- bzw. Klimamodul dazu eingerichtet, die Temperatur der Nutzlast bzw. der Gegenstände in der Transportbox für einen begrenzten Zeitraum zu stabilisieren. Die Lagerplätze können dazu eingerichtet sein, das passive Wärme- bzw. Klimamodul zu kühlen oder zu erwärmen.

In einer weiteren grundsätzlich denkbaren Ausführungsform ist die Bodenstation dazu eingerichtet, die Drohne mit Strom zu versorgen, während sich die Drohne auf dem Be- und/oder Entladeplatz befindet. Der von der Bodenstation zur Verfügung gestellte Strom kann zum Beispiel zum Laden eines Akkus der Drohne genutzt werden, und/oder zur Versorgung elektrischer Systeme der Drohne.

In einer weiteren Ausführungsform der Bodenstation umfasst das Transportsystem ein Portal, an dem bevorzugt die Transportbox-Aufnahme angeordnet ist. Bevorzugt ermöglicht das Portal ein Verfahren der Transportbox-Aufnahme in zwei Dimensionen, bevorzugt ausschließlich. Mit einem Portal wird im Rahmen dieser Druckschrift z. B. ein einem Türrahmen ähnliches Gestell bezeichnet, wie es auch ein Portalkran aufweist. Portale eignen sich oft zum Verfahren einer Aufnahme entlang der Richtungen eines kartesischen Koordinatensystems. Vorliegend ist das Portal derart eingerichtet, dass die Transportbox-Aufnahme entlang zweier, insbesondere zueinander rechtwinklig ausgerichteter, Richtungen (Y-Richtung und Z-Richtung) verfahren kann. In die dritte Richtung (X-Richtung) kann das Portal die Transportbox insbesondere nicht verfahren, wenigstens nicht zum Erreichen der Lagerplätze, der Übergabeplätze, und der Be- und/oder Entladeplätze. Das Portal kann einen vertikal verfahrbaren Träger umfassen, der mit seiner Längserstreckung horizontal angeordnet sein kann. Die Transportbox-Aufnahme kann in Richtung der Längserstreckung des Trägers an diesem verfahrbar angeordnet sein. Vorzugsweise ist der Querträger ausschließlich vertikal und nicht horizontal verfahrbar.

In einer weiteren Ausführungsform der Bodenstation ist das Transportsystem dazu eingerichtet, die Transportbox an einer Unterseite der Transportbox aufzunehmen. Die Unterseite der Transportbox ist eine insbesondere ebene Oberfläche der Transportbox, welche vorzugsweise einen vertikal ausgerichteten und nach unten weisenden Normalenvektor aufweist. Die Unterseite der Transportbox kann rutschhemmend ausgestaltet sein.

Wie bereits zuvor beschrieben umfasst das Transportsystem eine Transportbox-Aufnahme, mithilfe derer die Transportbox von dem Transportsystem aufgenommen werden kann. Eine solche Transportbox-Aufnahme kann beispielsweise eine Auflagefläche umfassen, auf der die Transportbox mit ihrer Unterseite abgelegt werden kann. Auf diese Weise verbleibt die Transportbox aufgrund der Schwerkraft auf der Auflagefläche. Die Auflagefläche kann derart gestaltet sein, dass eine reibschlüssige Verbindung zu der Transportbox aufgebaut werden kann. Aber auch eine formschlüssige und/oder kraftschlüssige Verbindung zur Transportbox ist denkbar.

Ergänzend oder alternativ zu der Auflagefläche kann die Transportbox-Aufnahme auch einen Greifer zum Greifen der Transportbox aufweisen. Eine Kombination aus Auflagefläche und Greifer ist denkbar.

Während die Transportbox durch die Transportbox-Aufnahme aufgenommen ist, kann es von Vorteil sein, wenn die Transportbox durch einen Sicherungsmechanismus mit der Transportbox-Aufnahme, insbesondere formschlüssig und/oder kraftschlüssig, verbunden ist, so dass ein Verrutschen der Transportbox relativ zur Transportbox-Aufnahme verhindert wird.

Es ist ergänzend oder alternativ zu dem Sicherungsmechanismus auch denkbar, dass maximale Beschleunigungen und/oder maximale Verfahrgeschwindigkeiten des Transportsystems während des Transports der Transportbox derart begrenzt sind, dass ein Verrutschen der Transportbox relativ zur Transportbox-Aufnahme verhindert wird. Dies kann beispielsweise durch eine entsprechend eingerichtete Steuerung des Transportsystems realisiert werden.

In einer weiteren Ausführungsform der Bodenstation weist die Bodenstation einen Positioniermechanismus auf, der dazu eingerichtet ist, eine auf der Bodenstation gelandete Drohne auf den Be- und/oder Entladeplatz zu positionieren. Je nach Steuerungsmöglichkeit der Drohne oder je nach Anordnung des Be- und/oder Entladeplatzes kann es sein, dass die Drohne nicht genau genug auf dem Be- und/oder Entladeplatz landen kann, oder der Be- und/oder Entladeplatz für die Drohne nicht ohne Weiteres im Flug erreichbar ist (beispielsweise, wenn der Be- und/oder Entladeplatz innerhalb der Bodenstation nach Art einer Garage angeordnet ist). Für diese Fälle umfasst die Bodenstation bevorzugt einen Positioniermechanismus, der die Drohne von ihrem tatsächlichen Landeplatz auf der Bodenstation auf den Be- und/oder Entladeplatz bewegt bzw. die Drohne auf dem Be- und/oder Entladeplatz derart positioniert, dass das Transportsystem die Transportbox entgegennehmen kann.

Ein solcher Positioniermechanismus kann zum Positionieren der Drohne einen Greifer, einen Roboterarm, und/oder Schieber zum waagerechten Verschieben der Drohne, oder dergleichen umfassen. Der Positionierungsmechanismus ist bevorzugt dazu eingerichtet, die Drohne während der Abgabe der Transportbox an die Drohne zu positionieren und beispielsweise ein Ausweichen der Drohne während des Drückens der Transportbox an bzw. in die Drohne zu verhindern.

In einer weiteren Ausführungsform der Bodenstation weist der Be- und/oder Entladeplatz eine - bevorzugt verschließbare - Be- und Entladeöffnung auf, die dazu eingerichtet, dass das Transportsystem die Transportbox beim Be- und Entladen der Drohne durch die Be- und Entladeöffnung hindurch transportieren kann. Dass die Be- und Entladeöffnung bevorzugt verschließbar ist, hat den Vorteil, dass die Drohne bei einem ungenauen Landeversuch nicht beispielsweise mit einer Landekufe in die Be- und Entladeöffnung geraten kann. Zudem wird das Innere der Bodenstation bei geschlossener Be- und Entladeöffnung vor Umwelteinflüssen geschützt.

Die Be- und Entladeöffnung kann durch einen oder mehrere Türflügel, eine einteilige oder mehrteilige Schiebetür, ein Rolltor, und/oder einen Zentralverschluss (auch als "Shutter" bezeichnet) verschließbar eingerichtet sein.

Die Be- und Entladeöffnung ist bevorzugt derart dimensioniert, dass die Transportbox durch die Be- und Entladeöffnung hindurch bewegt werden kann.

In einer weiteren Ausführungsform der Bodenstation ist die Bodenstation dazu eingerichtet, ein Gewicht der Transportbox zu erfassen. Insbesondere wird das Gewicht der Transportbox von dem Übergabeplatz und/oder jeweils von den Lagerplätzen und/oder von dem Transportsystem erfasst.

Das erfasste Gewicht der Transportbox umfasst insbesondere die darin befindlichen Gegenstände. Auf diese Weise kann mithilfe eines bekannten Leergewichts der Transportbox eine Nutzlast ermittelt werden. Diese Nutzlast kann wiederum mit einer maximalen Nutzlast abgeglichen werden, so dass beispielsweise eine Überladung der Transportbox festgestellt werden kann.

Eine Übergabe von überladenen Transportboxen an die Drohne kann durch die Bodenstation vorzugsweise verhindert werden.

Es ist auch denkbar, dass anhand des ermittelten Gewichts der Transportbox eine geeignete Drohne ausgewählt bzw. angefordert wird, welche geeignet für den Transport der Transportbox mit dem ermittelten Gewicht ist. Beispielsweise können unterschiedlich große bzw. starke Drohnen in der Lage sein, unterschiedlich schwere und/oder große Transportboxen zu transportieren.

Bei Transportboxen mit darin enthaltenem Flugakku ist es ebenfalls denkbar, dass die maximale Nutzlast der jeweiligen Transportbox davon abhängig gemacht wird, wie groß der Flugakku der jeweiligen Transportbox ist und/oder wie hoch der aktuelle Ladezustand des Flugakkus ist.

Bevor die Transportbox mit den zu transportierenden Gegenständen beladen wird, kann die Bodenstation oder die Transportbox selbst eine maximale Nutzlast zur Information der beladenden Person ausgeben.

Es ist auch möglich, dass die gewünschte Nutzlast vor einer Übergabe der zu transportierenden Gegenstände in die Bodenstation eingegeben oder nach der Übergabe der zu transportierenden Gegenstände von der Bodenstation ermittelt wird, und entsprechend der gewünschten oder ermittelten Nutzlast eine Transportbox mit geeigneter maximaler Nutzlast und/oder geeignetem Ladezustand ausgewählt wird.

Es ist darüber hinaus denkbar, dass abhängig von der Strecke, die die Transportbox von der Drohne transportiert werden soll, eine Transportbox mit geeignetem Ladezustand von der Bodenstation ausgewählt wird.

In einer weiteren Ausführungsform der Bodenstation beträgt eine maximale Länge der Bodenstation - gemessen in horizontaler Richtung - weniger oder gleich 5,5 m, und vorzugsweise eine maximale Breite der Bodenstation - ebenfalls gemessen in horizontaler Richtung und orthogonal zur Länge - weniger oder gleich 2,55 m. Eine Bodenstation mit solchen Außenmaßen kann auf einem bereits vorhandenen KFZ-Parkplatz aufgestellt werden.

Eine Begrenzung einer vertikalen Höhe der Bodenstation auf weniger oder gleich 4,0 m kann von Vorteil sein.

Die Bodenstation - insbesondere mit den zuvor genannten Außenmaßen - kann zudem bevorzugt multifunktional genutzt werden und beispielsweise einen Unterstellplatz für Personen bieten, und/oder als Bushaltestelle genutzt werden. Dazu kann die Bodenstation beispielsweise ein Vordach aufweisen, unter dem sich Personen geschützt vor Wind und Wetter unterstellen können und/oder einen oder mehrere Sitzplätze für Personen aufweisen. Eine solche Nutzung der Bodenstation kann die Akzeptanz der Gesellschaft gegenüber des vorliegenden Transportkonzeptes mittels Drohne erhöhen.

In einer weiteren Ausführungsform ist die Bodenstation auf einem PKW- oder LKW-Anhänger angeordnet. Vorzugsweise kann die Bodenstation zusammen mit dem Anhänger Außenmaße wie die zuvor genannten maximalen Außenmaße der Bodenstation aufweisen. Durch die Anordnung der Bodenstation auf einem Anhänger kann die Bodenstation mobil eingesetzt werden und auf entsprechenden Parkplätzen - beispielsweise überall in der Innenstadt - aufgestellt werden, sowie im Straßenverkehr ohne Sondergenehmigungen transportiert werden. Bevorzugt weist der PKW-Anhänger zusammen mit der Bodenstation maximale Außenmaße von 2,55 m in der Breite, 5,5 m in der Länge, und/oder 4,0 m in der Höhe auf.

Ein erfindungsgemäßes System weist eine Bodenstation auf, welche einem der zuvor beschriebenen Ausführungsbeispiele entspricht, sowie eine entsprechende Drohne und eine entsprechende Transportbox. Die Drohne ist dazu eingerichtet, die Transportbox mithilfe eines Befestigungsmechanismus aufzunehmen. Genauer gesagt umfasst das System bevorzugt mindestens eine Befestigungsvorrichtung und die Drohne ist weiter bevorzugt dazu eingerichtet, die Transportbox mithilfe der mindestens einen Befestigungsvorrichtung aufzunehmen. Bevorzugt umfasst die Befestigungsvorrichtung jeweils zwei zueinander komplementäre Komponenten, vorzugsweise nämlich den Befestigungsmechanismus und die mit diesem zusammenwirkende Halteeinrichtung. Vorzugsweise ist einerseits der Befestigungsmechanismus an der Drohne und/oder dem Lagerplatz angeordnet und andererseits die Halteeinrichtung an der Transportbox. Auch die umgekehrte Anordnung ist möglich.

Die Befestigungsvorrichtung bzw. der Befestigungsmechanismus weist bevorzugt eine Verriegelung auf. Die Befestigungsvorrichtung ist bevorzugt selbstverriegelnd bzw. weist eine selbstverriegelnde Verriegelung auf. Hiermit ist z. B. gemeint, dass eine Verriegelung der Halteeinrichtung an dem Befestigungsmechanismus durch ein Zusammenbringen von Halteeinrichtung und Befestigungsmechanismus ohne weiteres, bzw. passiv erfolgt. Hierdurch ist die Wahrscheinlichkeit, dass das Verriegeln scheitert, verringert. Das Zusammenbringen kann ein Zusammendrücken von Halteeinrichtung und Befestigungsmechanismus durch das Transportsystem unter Überwindung einer Federkraft umfassen.

Ein Entriegeln der Halteeinrichtung von dem Befestigungsmechanismus ist bevorzugt ausschließlich durch eine Betätigung der Befestigungsvorrichtung mittels der Betätigungseinrichtung möglich. Wenn die Betätigungsvorrichtung, wie bevorzugt nicht an der Drohne, sondern an der Bodenstation angeordnet ist, dann ist hierdurch vorzugsweise verhindert, dass eine Entriegelung der Halteeinrichtung von dem Befestigungsmechanismus während des Flugs der Drohne erfolgt.

Die Betätigungseinrichtung ist bevorzugt an der Transportbox-Aufnahme angeordnet, vorzugsweise beweglich, insbesondere höhenverstellbar zu dieser.

Vorzugsweise umfasst die Abgabe der Transportbox an die Drohne bzw. an einen Lagerplatz das Herstellen einer Verbindung zwischen den Komponenten der Befestigungsvorrichtung bzw. eine Verriegelung der Komponenten der Befestigungsvorrichtung.

Vorzugsweise umfasst die Aufnahme der Transportbox von der Drohne bzw. einem Lagerplatz das Trennen bzw. Entriegeln der Verbindung zwischen den Komponenten der Befestigungsvorrichtung.

In einer Ausführungsform ist das Transportsystem zur Abgabe der Transportbox an die Drohne und zur Aufnahme der Transportbox von der Drohne eingerichtet sowie zur Abgabe und Aufnahme der Transportbox an bzw. von dem wenigstens einen Lagerplatz, jedoch nicht zur Abgabe der Transportbox an den Übergabeplatz und nicht zur Aufnahme der Transportbox von dem Übergabeplatz. In dieser Ausführungsform gibt das Transportsystem die Transportbox bevorzugt nicht an den Übergabeplatz ab, sondern positioniert sie vorübergehend dort. Weiter bevorzugt erfolgt keine Aufnahme der Transportbox von dem Übergabeplatz, sondern lediglich ein Wegtransport von diesem durch das Transportsystem, vorzugsweise zu einem Lagerplatz und/oder Be- und/oder Entladeplatz.

Die Halteeinrichtung weist bevorzugt keine beweglichen Teile auf. Die Halteeinrichtung kann einen Stummel-Bolzen umfassen. Der Stummel-Bolzen kann z. B. von der Transportbox seitlich hervorstehen, vorzugsweise im oberen Bereich der Transportbox. Es können z. B. vier Stummel-Bolzen an den oberen Ecken der Transportbox von dieser seitlich bzw. in Längsrichtung der Transportbox hervorstehen.

Der Befestigungsmechanismus kann eine Zange umfassen, vorzugsweise zur Aufnahme der Halteeinrichtung bzw. des Stummel-Bolzens. Die Zange kann einen ersten z. B. unbeweglichen C-förmigen Bereich umfassen, der nach unten offen sein kann. Die Zange kann einen zweiten C-förmigen Bereich umfassen, der schwenkbar zwischen einer ersten z. B. nach schräg unten gerichteten, offenen Position und einer zweiten, z. B. seitlich offenen Position ist. Das Verschwenken von der ersten in die zweite Position kann durch ein Einführen und nach oben Verlagern der Halteeinrichtung bewirkbar sein. Auf den zweiten C-förmigen Bereich kann eine Feder wirken, die ihn in Richtung der ersten Position drückt. In der zweiten Position kann der zweite C-förmige Bereich zusammen mit dem ersten C-förmigen Bereich einen zumindest nahezu vollständig geschlossenen, also O-förmigen Bereich bilden, der die Halteeinrichtung zumindest nahezu vollumfänglich umfasst und sichert. Einen zumindest nahezu vollständig geschlossener, also O-förmiger Bereich kann im Rahmen dieser Offenbarung bereits dann als gegeben angesehen werden, wenn die Umfassung der Halteeinrichtung mehr als 180 Grad beträgt. Die Selbstverriegelung kann dadurch erreicht sein, dass der Befestigungsmechanismus einen federgelagerten Sperrhebel umfasst, der in der zweiten Position des zweiten C-förmigen Bereichs hinter einen Vorsprung des zweiten C-förmigen Bereichs einrastet. Erst eine Zurück-Verlagerung dieses Sperrhebels, vorzugsweise mit Hilfe der Betätigungseinrichtung, bewirkt bevorzugt eine Entriegelung der Befestigungsvorrichtung. Dies kann durch einen von unten gegen den federgelagerte Sperrhebel drückbaren Stift der Betätigungseinrichtung erfolgen. Die Betätigungseinrichtung bzw. der mindestens eine Stift kann höhenverlagerbar an der Transportbox-Aufnahme angeordnet sein. Pro Befestigungsvorrichtung ist bevorzugt genau ein Stift vorgesehen. Bei vier jeweils an der mindestens einen Drohne und/oder dem mindestens einen Lagerplatz vorgesehenen Befestigungsmechanismen sind bevorzugt also vier Stifte an der Transportbox-Aufnahme vorgesehen. Das Verriegeln kann durch das ohnehin erforderliche Anordnen der Transportbox an der Drohne bzw. an dem Lagerplatz erfolgen und das Entriegeln durch das Annähern der Transportbox-Aufnahme an die Transportbox und das nach oben Verlagern der Betätigungseinrichtung bzw. des mindestens einen Stifts relativ zur Transportbox-Aufnahme. Der Pin des Greifers kann durch eine mit dem Stift verbundene Rampe gegen eine Federkraft betätigbar sein.

Bevorzugt umfasst das System eine Überwachungseinrichtung, die die ordnungsgemäße Verriegelung der Befestigungsvorrichtung bzw. das Bringen der Verriegelung in den verriegelten Zustand überwacht. Die Überwachungseinrichtung kann eine Lichtschranke umfassen. Die Überwachungseinrichtung kann eine Stellung des Sperrhebels detektieren. Die Überwachungseinrichtung kann ein den Start der Drohne verhinderndes Fehlersignal erzeugen, wenn keine ordnungsgemäße Verriegelung aller Befestigungsvorrichtungen erkannt wurde.

Die Befestigungsvorrichtung kann auf diese Weise störungsunanfällig sein und, z. B. verglichen mit einer magnetisch wirkenden Befestigungsvorrichtung, eine geringe Masse bei hoher Tragkraft aufweisen.

Bevorzugt umfasst das System mindestens zwei Befestigungsvorrichtungen, vorzugsweise vier.

Durch das Zusammenspiel des Formschlusses zwischen Transportbox und Drohne und der mindestens zwei Befestigungsvorrichtungen ist bevorzugt eine Redundanz erzielt, die die Transportbox auch dann noch sicher an der Drohne hält, wenn eine der Befestigungsvorrichtungen versagen sollte. Denn in diesem Fall würde die mindestens eine weitere Befestigungsvorrichtung eine translatorische Verlagerung der Transportbox relativ zur Drohne verhindern und der Formschluss würde ein Verkippen der Transportbox relativ zur Drohne verhindern bzw. begrenzen, so dass weiterhin eine sichere Positionierung der Transportbox in der Drohne gewährleistet wäre.

Das System zeichnet sich bevorzugt dadurch aus, dass die Lagerplätze der Bodenstation jeweils den gleichen Befestigungsmechanismus bzw. die gleiche Halteeinrichtung zur Aufnahme bzw. Befestigung der Transportbox aufweisen wie die Drohne.

Bevorzugt sind mehrere Transportboxen vorgesehen. Die Transportboxen verbleiben bevorzugt im System, werden also beispielsweise nicht an den Nutzer ausgegeben.

Der Übergabeplatz weist bevorzugt eine Einfüll- bzw. Entnahmeöffnung auf, durch die das Innere einer auf dem Übergabeplatz angeordneten Transportbox für einen Nutzer zugänglich ist. Bevorzugt ist durch die Einfüll- bzw. Entnahmeöffnung ausschließlich das Innere einer auf dem Übergabeplatz angeordneten Transportbox für einen Nutzer zugänglich.

Allgemein ist die Einfüll- bzw. Entnahmeöffnung der Bodenstation bevorzugt so dimensioniert, dass es einem Nutzer unmöglich ist, eine Transportbox durch die Einfüll- bzw. Entnahmeöffnung aus der Bodenstation zu entfernen bzw. zu entnehmen. Hierdurch ergibt sich eine sehr gute Sicherheit des Systems gegen Manipulationen.

Wenn die Transportbox einen Ladebereich und einen Akkubereich aufweist, dann ist die Öffnung bevorzugt so bemessen, dass lediglich das Innere des Ladeberreichs zugänglich ist.

Der Befestigungsmechanismus weist bevorzugt eine bzw. die Verriegelung auf, welche vorzugsweise von unten betätigbar ist, vorzugsweise mittels der Betätigungseinrichtung. Die Verriegelung ist vorzugsweise derart eingerichtet, dass das Transportsystem der Bodenstation die Verriegelung in einer Bewegung im Wesentlichen von unten nach oben betätigen kann. Beim Betätigen der Verriegelung wechselt die Verriegelung zwischen einem verriegelten Zustand, in welchem die Transportbox mit der Drohne bzw. dem Lagerplatz mechanisch und/oder magnetisch verbunden ist, und einem entriegelten Zustand, in welchem die Transportbox nicht mechanisch und/oder magnetisch mit der Drohne bzw. dem Lagerplatz verbunden ist.

Die Verriegelung kann z. B. selbsthemmend ausgeführt sein. Dies bedeutet im vorliegenden Zusammenhang insbesondere, dass die Verriegelung aufgrund der Schwerkraft, welche auf die Transportbox wirkt, in den verriegelten Zustand bewegt wird. Es kann vorgesehen sein, dass die Transportbox, um die selbsthemmende Wirkung der Verriegelung zu überwinden, entgegen der Schwerkraft in im Wesentlichen vertikaler Richtung angehoben werden muss, um die Verriegelung in den entriegelten Zustand zu bringen.

In einer Ausführungsform des Systems weist die Transportbox einen Flugakku zur Versorgung der Drohne mit Strom auf, wobei bevorzugt der Flugakku bei der Entnahme der Transportbox aus der Drohne in der Transportbox verbleibt, und wobei weiter bevorzugt die Lagerplätze jeweils eine Stromversorgung und bevorzugt einen Gegenstecker zum Laden des Flugakkus während der Lagerung der Transportbox in einem der Lagerplätze aufweisen. Der Flugakku dient im Wesentlichen zur Versorgung der Auftriebs- und/oder Vortriebsmotoren der Drohne. Der Flugakku kann aber auch andere Einrichtungen der Drohne wie zum Beispiel eine Steuerung mit Strom versorgen.

Vorzugsweise ist die Drohne derart eingerichtet, dass die Drohne stromlos ist, wenn die Transportbox (inklusive dem Flugakku) nicht mit der Drohne verbunden ist. So verbleibt vorteilhafterweise kein Akku in der Drohne, der neben dem Flugakku der Transportbox für den nächsten Einsatz der Drohne geladen werden müsste. Die Drohne kann, z. B. wenn kein Akku mehr mit der Drohne verbunden ist, über den Be- und/oder Entladeplatz mit Strom versorgt werden. Alternativ kann sie in diesem Fall vollständig stromlos sein.

Ein erfindungsgemäßes Verfahren dient zum Betrieb eines Systems, welches einem der zuvor beschriebenen Ausführungsbeispiele entspricht. Die Bodenstation be- und/oder entlädt die Drohne automatisch.

Das Abgeben der Transportbox an die Drohne kann wie folgt erfolgen:
Die Transportbox kann mit der an der Transportbox angeordneten Befestigungsvorrichtungs-Komponente, z. B. den Stummel-Bolzen, in der an der Drohne angeordneten Befestigungsvorrichtungs-Komponente, z. B. der Zange, befestigt bzw. verriegelt werden.

Diese Befestigung bzw. Verriegelung kann durch nach oben auf die Drohne zu Verlagern der Transportbox, erfolgen, bevorzugt ausschließlich.

Die Transportbox kann dabei z. B. auf der Transportbox-Auflage aufliegen.

Das auf die Drohne zu Verlagern der Transportbox kann ein Drücken der Transportbox - bevorzugt von unten - an bzw. in die Drohne umfassen, vorzugsweise gegen die Kraft einer Feder der Befestigungsvorrichtung.

Das auf die Drohne zu Verlagern der Transportbox erfolgt vorzugsweise durch das Transportsystem, vorzugsweise mithilfe der Transportbox-Aufnahme.

Vorzugsweise wird während des auf die Drohne zu Verlagerns der Transportbox ein Stecker des Akkus mit seinem Gegenstecker gesteckt.

Bevorzugt erfolgt gleichzeitig mit der Herstellung der mechanischen Verbindung zwischen Transportbox und Drohne mittels der Befestigungsvorrichtung die Herstellung der elektrischen Verbindung zwischen Transportbox und Drohne durch Stecken des Steckers der Transportbox mit dem Gegenstecker der Drohne.

Das Abgeben der Transportbox an den Lagerplatz kann entsprechend erfolgen.

Das Aufnehmen der Transportbox von der Drohne kann wie folgt erfolgen:
Die leere Transportbox-Aufnahme kann von unten an die Drohne herangeführt werden, bevorzugt bis die noch an bzw. in der Drohne befestigte und verriegelte Transportbox auf der Transportbox-Aufnahme aufliegt. Die Betätigungseinrichtung kann aktiviert werden, bevorzugt durch nach oben Verlagern der Stifte der Betätigungseinrichtung. Der Greifer der Transportbox-Aufnahme kann aktiviert werden, vorzugsweise durch die Betätigungseinrichtung und bevorzugt indem die Pins des Greifers seitlich in komplementäre Aussparungen der Transportbox gedrückt werden, bevorzugt durch mit den Stiften verbundene Rampen. Anschließend kann die Betätigungseinrichtung eine Entriegelung der Befestigungsvorrichtung bewirken, bevorzugt indem die Stifte gegen die Sperrhebel der Befestigungsmechanismen drücken. Vorzugsweise gleichzeitig erfolgt ein Absenken der Transportboxaufnahme. Durch den Greifer ist bevorzugt sichergestellt, dass auch bei leerer Transportbox die Steckverbindungstrennkräfte erreicht werden und die Box nicht an dem Stecker hängenbleibt.

Das Aufnehmen der Transportbox von der Drohne kann also dadurch erfolgen, dass die Transportbox-Aufnahme bzw. der Greifer in Kontakt mit der Transportbox gebracht wird, die Befestigungsmechanismen entriegelt werden und die Transportbox mit Hilfe des Greifers nach unten gezogen wird. Vorzugsweise wird hierdurch gleichzeitig ein Stecker des Akkus aus seinem Gegenstecker gezogen.

Das Aufnehmen der Transportbox von einem Lagerplatz kann entsprechend erfolgen.

Die vorliegende Erfindung wird nachfolgend anhand von Ausführungsbeispielen bzw. eines Ausführungsbeispiels unter Bezugnahme auf die beigefügten Figuren eingehend erläutert. Es zeigen:
- Figur 1: eine Bodenstation mit einer Drohne, welche mit einer Transportbox beladen ist,
- Figur 2: die Bodenstation aus Fig. 1 mit einer Transportbox während des Transports durch das Transportsystem sowie die entladene Drohne,
- Figur 2a: die Drohne und Transportbox aus Fig. 1, wobei die Transportbox unterhalb der Drohne angeordnet ist,
- Figur 2b: eine Befestigungsvorrichtung der Drohne bzw. des Lagerplatzes der Bodenstation aus Fig. 1 im entriegelten Zustand,
- Figur 2c: eine Befestigungsvorrichtung der Drohne bzw. des Lagerplatzes der Bodenstation aus Fig. 1 im verriegelten Zustand,
- Figur 3: die Bodenstation aus Fig. 1 mit der Transportbox in einem der Lagerplätze.

In den Figuren bezeichnen - soweit nicht anders angegeben - gleiche Bezugszeichen gleiche oder einander entsprechende Komponenten mit gleicher Funktion.

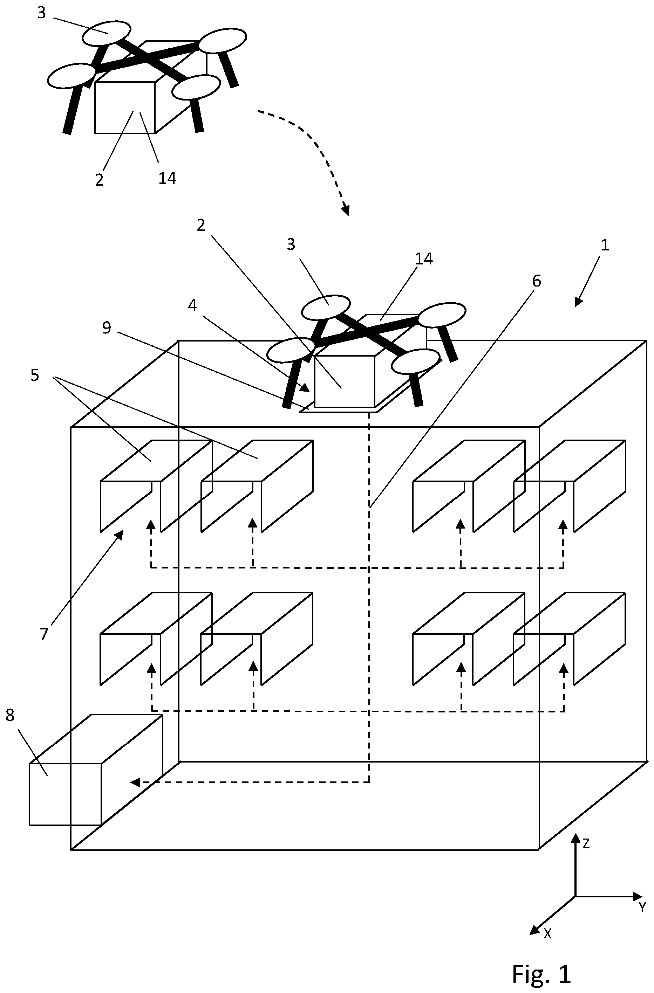

Figur 1 zeigt eine Bodenstation 1 mit einer Drohne 3, wobei die Drohne 3 mit einer Transportbox 2 beladen ist. Die Drohne 3 ist auf der Bodenstation 1 gelandet und befindet sich auf einem Be- und/oder Entladeplatz 4. Zur Veranschaulichung des Anflugs der Drohne 3 auf die Bodenstation 1 ist die Drohne 3 zusätzlich kurz vor dem Landen auf dem Be- und/oder Entladeplatz 4 noch einmal in der Luft fliegend dargestellt.

Der Be- und/oder Entladeplatz 4 weist eine Be- und Entladeöffnung 9 auf, durch die die Transportbox 2 beim Entladen der Drohne 3 nach unten in die Bodenstation 1 eingeführt werden kann, und beim Beladen der Drohne 3 nach oben aus der Bodenstation 1 herausgeführt werden kann.

Die Bodenstation 1 umfasst mehrere Lagerplätze 5, die dazu dienen jeweils eine Transportbox 2 aufzunehmen und zwischenzulagern. Die Lagerplätze 5 sind jeweils nach unten offen ausgebildet, so dass die Transportbox 2 von unten in den Lagerplatz 5 eingeführt werden kann. Während der Lagerung der Transportbox 2 in einem der Lagerplätze 5 ist die Transportbox 2 hängend in dem entsprechenden Lagerplatz 5 aufgenommen. Das heißt die Transportbox 2 wird während der Lagerung nicht an einer Unterseite der Transportbox 2 vom Lagerplatz 5 unterstützt.

Die Lagerplätze 5 sind schematisch als Quader mit zwei geschlossenen und zwei offenen Seitenflächen dargestellt, sowie mit offener Unterseite und geschlossener Oberseite. Die offene Unterseite bildet eine Lagerplatz-Öffnung 7 aus, durch welche hindurch die Transportbox 2 in den Lagerplatz 5 ein- und ausgeführt werden kann. Welche Seiten geschlossen oder offen ausgeführt sind, ist vorliegend nicht wesentlich. Entscheidend ist, dass die Transportbox 2 von unten durch die Lagerplatz-Öffnung 7 in den Lagerplatz 5 einführbar ist, und oberhalb eines Schwerpunktes der Transportbox 2 mit dem Lagerplatz 5 während der Lagerung verbunden ist. Anders ausgedrückt können die geschlossenen bzw. geöffneten Seiten auch als gedachte Begrenzung des freien Volumens des Lagerplatzes angesehen werden. Die Lagerplatz-Öffnung 7 kann der gedachte Übergang zwischen dem freien Volumen und dem unterhalb des freien Volumens angeordneten Bereichs der Bodenstation sein.

Des Weiteren umfasst die Bodenstation 1 einen Übergabeplatz 8, der dazu eingerichtet ist eine Transportbox 2 an eine Person außerhalb der Bodenstation 1 auszugeben. Es ist auch möglich, dass an dem Übergabeplatz 8 lediglich der Inhalt der Transportbox 2 der Person zugänglich gemacht wird. Der Übergabeplatz 8 kann zudem dazu dienen, eine Transportbox 2 der Bodenstation 1 zuzuführen. Im gezeigten Ausführungsbeispiel dient er dazu, eine Transportbox 2 mit zu transportierenden Gegenständen zu befüllen.

Die Bodenstation 1 verfügt über ein Transportsystem 6, welches in der vorliegenden Darstellung nur rudimentär anhand von gestrichelten Linien verdeutlicht wird. Das Transportsystem 6 ist dazu eingerichtet die Transportbox 2 von der Drohne 3 auf dem Be- und/oder Entladeplatz 4 entgegenzunehmen und innerhalb der Bodenstation 1 zu transportieren. Die gestrichelten Linien zeigen die Verfahrwege des Transportsystems 6. Das Transportsystem 6 ist lediglich in der Lage in zwei Raumrichtungen, vorliegend in Y- und Z-Richtung, zu verfahren.

Damit alle Lagerplätze 5, der Be- und/oder Entladeplatz 4, und der Übergabeplatz 8 von dem Transportsystem 6 erreicht werden können, sind diese entsprechend relativ zueinander ausschließlich in maximal zwei Richtungen (vorliegend in Y- und Z-Richtung) versetzt zueinander angeordnet, und nicht auch in einer dritten Richtung (bspw. in X-Richtung) versetzt zueinander angeordnet. Die Lagerplätze 5 sind dazu vorliegend in einem Muster aus zwei Reihen und zwei Spalten angeordnet. Eine unregelmäßige Anordnung ist ebenfalls zielführend.

Entlang der Verfahrwege des Transportsystems 6 sind die Lagerplätze 5 derart beabstandet zueinander angeordnet, dass das Transportsystem 6 eine Transportbox 2 entlang der Verfahrwege transportieren kann. Das heißt, dass unterhalb der Lagerplätze 5 genügend Abstand zu daruntergelegenen Lagerplätzen 5 oder Einrichtungen der Bodenstation 1 vorhanden ist, damit die Transportbox 2 jeweils von unten den Lagerplätzen 5 von dem Transportsystem 6 zugeführt werden kann.

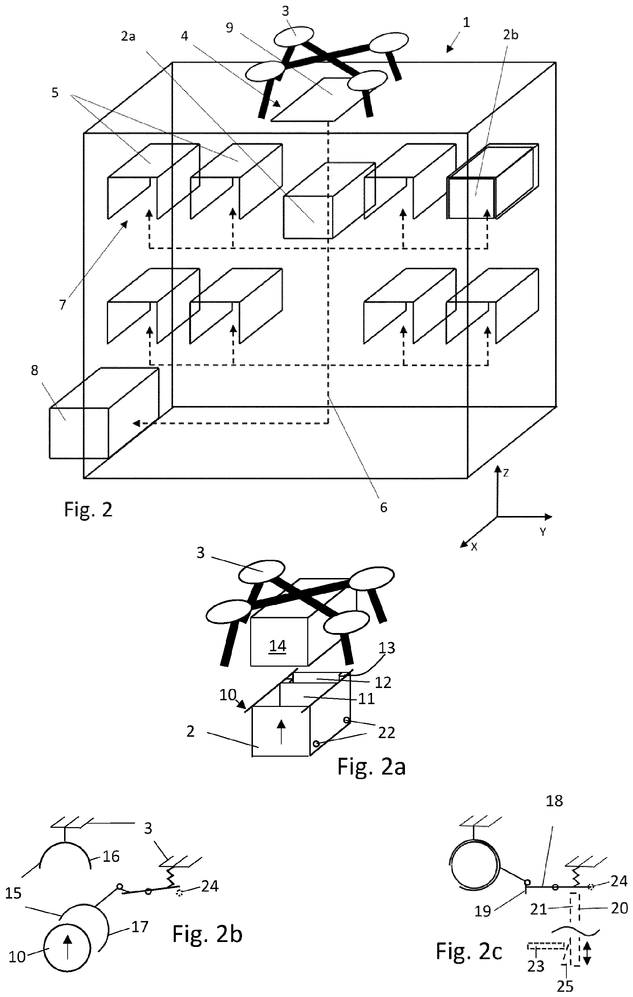

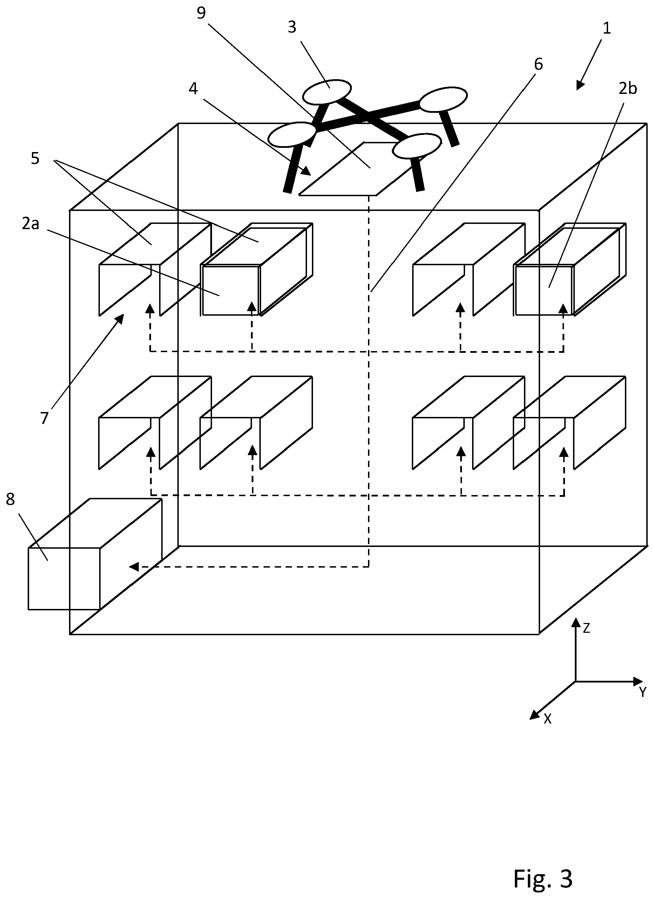

Die Figuren 2 und 3 zeigen die Bodenstation 1 aus der Figur 1 mit zwei Transportboxen 2a und 2b in verschiedenen Positionen innerhalb der Bodenstation 1. Die Transportbox 2a ist in Figur 2 von dem Transportsystem 6 aufgenommen und wird von dem Be- und/oder Entladeplatz 4 zu einem der Lagerplätze 5 transportiert. In Figur 3 befindet sich die Transportbox 2a in einem der Lagerplätze 5.

Die Transportbox 2b befindet sich sowohl in Figur 2 als auch in Figur 3 in einem der Lagerplätze 5 und wird so lange zwischengelagert, bis die Transportbox 2b entweder einer Drohne 3 oder dem Übergabeplatz 8 zugeführt werden soll.

Die Lagerplätze 5 der Bodenstation 1 weisen jeweils den gleichen Befestigungsmechanismus zur Aufnahme der Transportboxen 2a und 2b auf, wie die Drohne 3. Die Transportboxen 2a und 2b sind in den Lagerplätzen 5 und/oder der Drohne 3 hängend aufnehmbar.

In Fig. 2a ist die Transportbox 2 noch nicht an die Drohne 3 abgegeben. Fig. 2a zeigt, dass die Drohne 3 über die einen Ladebereich 11 und einen Akkubereich 12 aufweisende Transportbox 2 stülpbar ist und in dem Laderaum 14 der Drohne 3 aufnehmbar ist. Die Transportbox 2 ist als Träger ausgebildet, mit nach oben offenem Ladebereich 11 und Akkubereich 12. Fig. 1 zeigt, dass die Transportbox 2 in der Drohne 3, genauer gesagt in dem Laderaum 14 der Drohne 3 anordenbar ist, und zwar derart, dass die Transportbox 2 von allen Seiten mit Ausnahme der Unterseite, zumindest nahezu vollständig von der Drohne 3 umgeben ist und die Unterseite der Transportbox 2 zumindest nahezu bündig mit der umgebenden Unterseite der Drohne 3 abschließt. Auch die vier Stummel-Bolzen 10, die an den oberen Ecken der Transportbox 2 von dieser seitlich hervorstehen, sind in Fig. 2a gezeigt, ebenso wie die beiden in dem Akkubereich 12 an der Transportbox 2 befestigten Stecker 13. Die in dem Laderaum 14 der Drohne befestigten Gegenstecker sind in den Fig. nicht gezeigt. Der Laderaum 14 der Drohne ist derart größer als die Transportbox 2 dimensioniert, dass auch die Stummel-Bolzen 10 in ihm Platz finden. Der Laderaum 14 ist in den Fig. 2 und 3 aus zeichnerischen Gründen weggelassen.

Die Fig. 2a und 2b zeigen die in den übrigen Figuren nicht im Detail dargestellte Befestigungsvorrichtung genauer.

Fig. 2b zeigt, dass der Befestigungsmechanismus in dem gezeigten Ausführungsbeispiel durch eine Zange 15 gebildet ist, zur Aufnahme einer Halteeinrichtung in Form eines Stummel-Bolzens 10. Die Zange 15 umfasst einen ersten unbeweglichen C-förmigen Bereich 16, der nach unten offen ist. Die Zange 15 umfasst einen zweiten C-förmigen Bereich 17, der schwenkbar zwischen einer ersten nach schräg unten gerichteten, offenen Position, wie sie Fig. 2b zeigt, und einer zweiten, seitlich offenen Position ist, wie sie Fig. 2c zeigt. Das Verschwenken von der ersten in die zweite Position ist durch ein Einführen und nach oben Verlagern eines Stummel-Bolzens 10 bewirkbar. In der zweiten Position bildet der zweite C-förmige Bereich 17 zusammen mit dem ersten C-förmigen Bereich 16 einen nahezu vollständig geschlossenen, also O-förmigen Bereich, der den Stummel-Bolzen 10 nahezu vollumfänglich umfasst und sichert. Die Selbstverriegelung ist dadurch erreicht, dass die Zange 15 einen federgelagerten Sperrhebel 18 umfasst, der in der zweiten Position des zweiten C-förmigen Bereichs 17 hinter einen Vorsprung 19 des zweiten C-förmigen Bereichs 17 einrastet, wie es Fig. 2c zeigt. Erst eine Zurück-Verlagerung dieses Sperrhebels 18 mit Hilfe der Betätigungseinrichtung 20 bewirkt eine Entriegelung der Befestigungsvorrichtung. Dies erfolgt durch einen von unten gegen den Sperrhebel 18 drückbaren Stift 21 der Betätigungseinrichtung 20, der höhenverstellbar an der Transportbox-Auflage (in den Fig. nicht gezeigt) angeordnet ist. Das Verriegeln der Befestigungsvorrichtung erfolgt durch das ohnehin erforderliche Anordnen der Transportbox 2 an der Drohne 3 bzw. an dem Lagerplatz 5.

Fig. 2b und 2c zeigen auch die Lichtschranke 24 der Überwachungseinrichtung, die die Stellung des Sperrhebels 18 im verriegelten Zustand der Befestigungsvorrichtung detektiert.

Auch ein Pin 23 und die ihn betätigende und mit dem Stift 21 verbundene Rampe 25 ist in Fig. 2c gezeigt.

Das Transportsystem 6 umfasst eine Transportbox-Aufnahme, die eine Auflagefläche umfasst, auf der die Transportboxen 2a und 2b jeweils mit ihrer Unterseite abgelegt werden können.

### Bezugszeichenliste

- 1: Bodenstation
- 2: Transportbox
- 2a: Transportbox
- 2b: Transportbox
- 3: Drohne
- 4: Be- und/oder Entladeplatz
- 5: Lagerplatz
- 6: Transportsystem
- 7: Lagerplatz-Öffnung
- 8: Übergabeplatz
- 9: Be- und Entladeöffnung
- 10: Stummel-Bolzen
- 11: Ladebereich
- 12: Akkubereich
- 13: Stecker
- 14: Laderaum
- 15: Zange
- 16: erster Bereich der Zange
- 17: zweiter Bereich der Zange
- 18: Sperrhebel
- 19: Vorsprung
- 20: Betätigungseinrichtung
- 21: Stift
- 22: seitliche, zu einem Pin komplementäre, Aussparung
- 23: Pin
- 24: Lichtschranke
- 25: Rampe

## Patentansprüche

1. Bodenstation (1) zum automatischen Be- und/oder Entladen einer zum Transport einer Transportbox (2) eingerichteten Drohne (3), wobei die Bodenstation (1) wenigstens einen Be- und/oder Entladeplatz (4) für die Drohne (3), wenigstens einen Lagerplatz (5) zur Lagerung einer Transportbox (2), und wenigstens einen Übergabeplatz (8) zur Ausgabe und/oder Annahme der Transportbox (2) oder deren Inhalt aufweist, wobei die Bodenstation (1) des Weiteren ein Transportsystem (6) aufweist, wobei das Transportsystem (6) zum Transport der Transportbox (2) innerhalb der Bodenstation (1), sowie zur Abgabe der Transportbox (2) an den wenigstens einen Lagerplatz (5), den wenigstens einen Übergabeplatz (8), und/oder an die Drohne (3) auf dem wenigstens einen Be- und/oder Entladeplatz (4) beim Beladen der Drohne (3), und/oder zur Aufnahme der Transportbox (2) von dem wenigstens einen Lagerplatz (5), von dem wenigstens einen Übergabeplatz (8), und/oder von der Drohne (3) auf dem wenigstens einen Be- und/oder Entladeplatz (4) beim Entladen der Drohne (3) eingerichtet ist,
**wobei bevorzugt**
der wenigstens eine Lagerplatz (5), der wenigstens eine Be- und/oder Entladeplatz (4), und der wenigstens eine Übergabeplatz (8) derart eingerichtet sowie relativ zueinander angeordnet sind, dass die Transportbox (2) zwischen dem wenigstens einen Lagerplatz (5), dem wenigstens einen Be- und/oder Entladeplatz (4), und dem wenigstens einen Übergabeplatz (8) durch Verfahren des Transportsystems (6) in zwei Dimensionen transportierbar ist.

2. Bodenstation (1) nach Anspruch 1,
**dadurch gekennzeichnet, dass**
der wenigstens eine Lagerplatz (5) eine Lagerplatz-Öffnung (7) aufweist, welche derart eingerichtet ist, dass die Transportbox (2) von unten durch die Lagerplatz-Öffnung (7) von dem Transportsystem (6) in den wenigstens einen Lagerplatz (5) ein- und ausführbar ist.

3. Bodenstation (1) nach einem der vorhergehenden Ansprüche,
**dadurch gekennzeichnet, dass**
der wenigstens eine Lagerplatz (5) derart eingerichtet ist, dass die Transportbox (2) in dem wenigstens einen Lagerplatz (5) hängend aufnehmbar ist.

4. Bodenstation (1) nach einem der vorhergehenden Ansprüche,
**dadurch gekennzeichnet, dass**
wenigstens ein Lagerplatz (5) eine Stromversorgung zur Versorgung der Transportbox (2) mit Strom aufweist, insbesondere zum Laden eines Ackus der Transportbox (2).

5. Bodenstation (1) nach einem der vorhergehenden Ansprüche,
**dadurch gekennzeichnet, dass**
das Transportsystem (6) ein verfahrbares Portal umfasst.

6. Bodenstation (1) nach einem der vorhergehenden Ansprüche,
**dadurch gekennzeichnet, dass**
das Transportsystem (6) dazu eingerichtet ist, die Transportbox (2) an einer Unterseite der Transportbox (2) aufzunehmen.

7. Bodenstation (1) nach einem der vorhergehenden Ansprüche,
**dadurch gekennzeichnet, dass**
die Bodenstation (1) einen Positioniermechanismus aufweist, der dazu eingerichtet ist, eine auf der Bodenstation (1) gelandete Drohne (3) auf den wenigstens einen Be- und/oder Entladeplatz (4) zu positionieren.

8. Bodenstation (1) nach einem der vorhergehenden Ansprüche,
**dadurch gekennzeichnet, dass**
der wenigstens eine Be- und/oder Entladeplatz (4) eine verschließbare Be- und Entladeöffnung (9) aufweist, die derart eingerichtet ist, dass das Transportsystem (6) die Transportbox (2) beim Be- und Entladen der Drohne (3) durch die Be- und Entladeöffnung (9) hindurch transportieren kann.

9. Bodenstation (1) nach einem der vorhergehenden Ansprüche,
**dadurch gekennzeichnet, dass**
die Bodenstation (1) - z. B. das Transportsystem (6) und/oder der wenigstens ein Lagerplatz (5) - dazu eingerichtet ist, ein Gewicht der Transportbox (2) zu erfassen.

10. Bodenstation (1) nach einem der vorhergehenden Ansprüche,
**dadurch gekennzeichnet, dass**
eine maximale Länge der Bodenstation (1) gemessen in horizontaler Richtung kleiner oder gleich 5,5 m ist, und vorzugsweise eine maximale Breite der Bodenstation (1) gemessen in horizontaler Richtung kleiner oder gleich 2,55 m ist.

11. Bodenstation (1) nach einem der vorhergehenden Ansprüche,
**dadurch gekennzeichnet, dass**
die Bodenstation (1) auf einem PKW-Anhänger angeordnet ist.

12. System, **dadurch gekennzeichnet, dass** das System eine Bodenstation (1) gemäß einem der vorhergehenden Ansprüche umfasst, eine Drohne (3) und eine Transportbox (2), wobei die Drohne (3) dazu eingerichtet ist, die Transportbox (2) mithilfe eines Befestigungsmechanismus aufzunehmen.

13. System nach dem vorhergehenden Anspruch,
**dadurch gekennzeichnet, dass**
der wenigstens eine Lagerplatz (5) der Bodenstation (1) den gleichen Befestigungsmechanismus zur Aufnahme der Transportbox (2) aufweist wie die Drohne (3)
und/oder dass die Transportbox (2) einen Flugakku zur Versorgung der Drohne (3) mit Strom aufweist, wobei der Flugakku bei der Entnahme der Transportbox (2) aus der Drohne (3) in der Transportbox (2) verbleibt,
und wobei wenigstens ein Lagerplatz (5) eine Stromversorgung zum Laden des Flugakkus während der Lagerung der Transportbox (2) in dem Lagerplatz (5) aufweist.

14. Verfahren zum Betrieb eines Systems nach Anspruch 12 oder 13,
**dadurch gekennzeichnet, dass**
die Bodenstation (1) die Drohne (3) automatisch be- und/oder entlädt.

15. Verfahren nach Anspruch 14, wobei die Transportbox (2) einen Akku zur Versorgung der Drohne (3) mit Strom aufweist
**dadurch gekennzeichnet, dass**
die Abgabe der Transportbox (2) an die Drohne (3) durch Drücken der Transportbox (2) an bzw. in die Drohne (3) durch das Transportsystem (6) erfolgt, wobei hierdurch gleichzeitig mit der Herstellung der mechanischen Verbindung zwischen der Transportbox (2) und der Drohne (3) mittels der Befestigungsvorrichtung die Herstellung der elektrischen Verbindung zwischen der Transportbox (2) und der Drohne (3) durch Stecken des Steckers (13) der Transportbox (2) mit dem Gegenstecker der Drohne (3) erfolgt.
